# DEMANDE DE BREVET EUROPEEN

(11) **EP 2 022 674 A1**
(43) Date de publication de la demande: **11.02.2009**
(21) Numéro de dépôt: 08300228.7
(22) Date de dépôt: 23.06.2008
(51) Int. Cl.: B60R 5/04

(54) **Dispositif de positionnement d'un panneau dans un coffre et véhicule automobile comportant un tel dispositif**

(30) Priorité: 25.07.2007 FR 0756725
(71) Demandeur: Eurostyle France, 91370 Verrières le Buisson (FR)
(72) Inventeur: Chausset, M. François, 36250, Saint Maur (FR)
(74) Mandataire: Thinat, Michel

(57) **Abrégé**

L'invention concerne un dispositif permettant de positionner un panneau (1) à différentes hauteurs dans le coffre d'un véhicule automobile, le dispositif comprenant deux supports (2) destinés à être solidaires d'une structure (S) du coffre et conformés pour pouvoir maintenir le panneau (1) à l'une quelconque de plusieurs hauteurs prédéterminées.

Chacun des supports (2) est pourvu de deux gorges reliées l'une à l'autre à leurs deux extrémités opposées et comporte des logements (43, 44) s'étendant à partir de l'une des deux gorges à des niveaux correspondant aux différentes hauteurs prévues pour le positionnement du panneau, un élément mobile conformé pour pouvoir circuler dans les gorges et les logements et pour être relié au panneau (1), et des moyens d'aiguillage conformés pour octroyer à l'élément mobile un parcourt en boucle.

## Description

La présente invention concerne un dispositif permettant de positionner un panneau à différentes hauteurs dans le coffre d'un véhicule automobile, ainsi qu'un véhicule automobile comportant un tel dispositif.

La plupart des véhicules automobiles dits de tourisme ont un coffre dont la hauteur est déterminée entre un plancher et le capot du coffre et dont les dimensions en largeur et en longueur sont déterminées entre deux parois latérales généralement constituées par la carrosserie et entre la paroi arrière transversale de la carrosserie et un ou deux dossiers de sièges arrières ou un panneau correspondant.

Tout aussi avantageux qu'il puisse être de pouvoir disposer d'un grand coffre pour pouvoir y ranger facilement de grandes valises et/ou de grands cartons et d'autres objets de grandes dimensions, aussi pénible peut-il être de devoir ranger dans un tel coffre de petits objets sans pouvoir les regrouper et notamment sans pouvoir garder une certaine délimitation entre les différents groupes d'objets. En outre, il peut être désagréable de devoir ranger juste quelques petits cartons dans un coffre dont le plancher est bas par rapport au seuil de chargement, notamment lorsque le seuil de chargement est haut et ces quelques petits cartons ne remplissent qu'un faible pourcentage du volume du coffre.

Des problèmes semblables peuvent se présenter dans l'espace de chargement d'un fourgon ou d'une fourgonnette. En effet, dans la mesure où les fourgons, et à une échelle moindre aussi les fourgonnettes, sont principalement destinés au transport de grands cartons et autres grands objets, le rangement de petits cartons ou petits objets dans l'espace de chargement de tels véhicules peut s'avérer difficile dans le sens que les petits cartons risquent, par exemple, d'être enfouis, au cours du transport, sous les grands cartons même s'ils ont été initialement placés au-dessus de ces derniers.

Par ailleurs, il s'est avéré souhaitable de pouvoir varier la hauteur du plancher d'un coffre ou même de pouvoir disposer temporairement, en sus du plancher du coffre, d'un panneau supplémentaire servant comme second plancher, pouvant être disposé à un ou plusieurs niveaux intermédiaires, et permettant ainsi un compartimentage, éventuellement variable, en hauteur du coffre.

Le but de l'invention est donc de proposer un dispositif qui permette de positionner un panneau à différentes hauteurs dans le coffre ou l'espace de chargement d'un véhicule automobile.

Pour simplifier la description de l'invention, référence sera faite, par la suite, uniquement à la mise en oeuvre de l'invention dans le coffre d'un véhicule automobile tel une voiture de tourisme, la mise en oeuvre de l'invention dans l'espace de chargement d'un fourgon, d'une fourgonnette ou d'un break en découlant par analogie.

Le but de l'invention est atteint avec un dispositif permettant de positionner un panneau à différentes hauteurs dans le coffre d'un véhicule automobile, le dispositif comprenant deux supports destinés à être solidaires d'une structure du coffre et conformés pour pouvoir maintenir le panneau à l'une quelconque de plusieurs hauteurs prédéterminées.

Selon l'invention, chacun des supports est pourvu de deux gorges reliées l'une à l'autre à leurs deux extrémités opposées et s'étendant en hauteur, lorsque le support est monté dans le coffre, et comporte des logements s'étendant à partir de l'une des deux gorges à des niveaux correspondant aux différentes hauteurs prévues pour le positionnement du panneau, un élément mobile conformé pour pouvoir circuler dans les gorges et les logements et pour être relié au bord latéral correspondant du panneau, et des moyens d'aiguillage disposés à l'entrée de chaque logement et conformés pour pouvoir empêcher l'élément mobile de descendre dans la gorge à partir de laquelle les logements s'étendent, les logements de chacun des supports étant de forme essentiellement allongée et partant de celle des deux gorges qui, lorsque les supports sont montés dans le coffre, est disposée plus éloignée de l'ouverture du coffre.

Le dispositif de l'invention peut être utilisé essentiellement de deux manières. Selon la première, le plancher du coffre est aménagé de manière à pouvoir être utilisé constamment, c'est-à-dire il est formé par une plaque et/ou un revêtement restant en permanence en place, par exemple lorsqu'il couvre le logement d'une roue de secours. Le coffre comporte alors un panneau mobile formant un plancher supplémentaire à niveau variable et permettant ainsi un compartimentage en hauteur du coffre.

Selon la seconde manière, le coffre est équipé uniquement d'un panneau formant un plancher à niveau variable. L'espace en dessous de ce panneau n'est alors pas utilisé, au moins selon l'esprit de cette manière d'utilisation de l'invention.

Pour chacune de ces deux manières d'utiliser l'invention, le dispositif de l'invention se présente avec deux supports destinés à être disposés à l'intérieur du coffre et notamment solidaires d'une structure du coffre, généralement le fond ou les parois latérales du coffre, formés par des parties correspondantes de la carrosserie.

Selon un mode de réalisation préféré de l'invention, les deux supports du dispositif de l'invention sont des éléments distincts destinés à être montés proche des parois latérales du coffre, par exemple par vissage sur le plancher du coffre ou par fixation sur des parties de carrosserie du véhicule qui forment les parois latérales du coffre.

Avantageusement, le panneau est maintenu par les bords latéraux de celui-ci, puisque la manipulation du panneau lors d'un changement de hauteur implique un pivotement du panneau autour d'un axe horizontal, comme cela sera décrit plus loin dans ce texte. Selon une solution alternative, le panneau est maintenu par le bord éloigné de l'ouverture du coffre, l'axe de pivotement précité devant alors être placé de manière appropriée.

En ce qui concerne la réalisation des deux supports, il est également concevable que le corps de chacun des supports soit intégré dans les parois latérales du coffre, c'est-à-dire obtenu par exemple par emboutissage. Le corps de chacun des corps ainsi formés est alors équipé et habillé avec les différents éléments fonctionnels décrits plus loin dans le présent texte.

Quel que soit le type de support choisi, notamment support distinct ou support intégré, du côté de l'ouverture du coffre, le panneau est maintenu par des éléments d'appui qui peuvent être, eux aussi, des éléments distincts ou des éléments formés de matière dans la carrosserie du véhicule, notamment dans des parties latérales de la carrosserie proche de la paroi arrière transversale, sous la forme d'encoches ou sous la forme de parties proéminentes.

Pour réaliser à la fois un positionnement du panneau à différentes hauteurs dans le coffre et un mouvement en translation du panneau entre ces positions, chacun des supports comporte deux gorges reliées entre elles à leurs extrémités opposées et s'étendant en hauteur lorsque les supports sont à leur place dans le coffre d'un véhicule automobile. Sur le plan pratique, la caractéristique « en hauteur » signifie que les deux gorges s'étendent alors au moins approximativement verticalement ou, pour suivre l'inclinaison des dossiers de siège arrière définissant la limite de fond du coffre, sont inclinées dans le même sens et au moins approximativement au même degré que lesdits dossiers. De plus, les deux gorges s'étendent avantageusement, mais pas nécessairement, sensiblement parallèlement l'une à l'autre.

Par le fait de relier les deux gorges l'une à l'autre à leurs extrémités opposées, il est formé un parcourt quasiment en boucle, comme cela sera explicité plus loin dans ce texte.

Pour pouvoir mettre en oeuvre à la fois la possibilité de positionner un panneau à différentes hauteurs prédéterminées et de pouvoir changer le panneau de position d'une manière simple et par un geste presque intuitif, le panneau est pourvu d'un axe unique ou de deux axes droit et gauche au moyen duquel ou desquels il est engagé dans les gorges des supports. Plus précisément, celle des deux gorges de chacun des supports qui, lorsque les supports sont disposés dans le coffre, est située le plus éloigné de l'ouverture du coffre, est pourvu de logements formés en cul de sac à partir de la gorge. Dans l'exemple de réalisation expliqué plus loin, la gorge correspondante de chacun des supports est pourvue de trois logements de manière à pouvoir positionner le panneau au niveau du plancher du coffre ou à une position à mi-hauteur ou dans le haut du coffre. Toutefois, le nombre de logements et donc le nombre de positions ou hauteurs prédéterminées peut tout aussi bien être égal à deux ou supérieur à trois. De même, ces positions prédéterminées peuvent être reparties de manière régulière ou de manière irrégulière.

Selon la présente invention, chacun des supports comporte un élément mobile qui est d'un côté conformé pour pouvoir circuler dans les gorges et les logements et qui, d'un autre côté, est conformé pour recevoir l'extrémité respectivement droite ou gauche de l'axe unique ou l'extrémité respectivement de l'axe droit ou de l'axe gauche du panneau. L'élément mobile a généralement la forme d'une bague de guidage dont la forme essentiellement annulaire facilite le déplacement dans les gorges et dans les logements et qui facilite en plus la coopération des axes du panneau avec des moyens d'aiguillage qui déterminent le parcours des éléments mobiles dans les gorges des supports de manière qu'un changement de position puisse s'effectuer de façon intuitive avec des efforts de manoeuvre des plus faibles possible.

La disposition de ces deux gorges, et notamment la disposition des logements partant de celle des deux gorges qui est disposée plus éloignée de l'ouverture du coffre, est choisie afin que l'utilisateur du véhicule automobile puisse saisir le panneau au bord orienté vers lui, et éventuellement par une ouverture pratiquée proche de ce bord, et soulever le panneau tout en le tirant légèrement et en le mettant ainsi dans une position inclinée de l'ordre de 40 à 50 degrés. Lorsque le panneau a atteint la hauteur désirée, l'utilisateur du véhicule laisse descendre le panneau dans les logements atteints, ce qui se fait généralement par son propre poids.

En effet, les logements correspondants aux différents niveaux ou hauteurs prédéterminées pour le panneau s'étendent à partir de la gorge correspondante avec une légère inclinaison vers le bas. Cette pente a pour but d'assurer que le panneau ne sorte pas aux moindres secousses que le véhicule pourrait subir ou par des vibrations lorsqu'il circule. La pente n'a pas besoin d'être très forte, un angle d'environ 15° à 25° par rapport à l'horizontale, lorsque les supports sont en place, étant généralement suffisant.

A l'entrée de chacun des logements est positionné un basculeur monté sous contrainte d'un élément de rappel de manière qu'il bascule entre une position de repos et une position temporaire. De plus, au basculeur du logement le plus élevé est assorti une butée basculante. Ce basculeur et la butée basculante sont formés chacun, et disposés l'un par rapport à l'autre, de manière que le basculement du basculeur de sa position de repos vers la position temporaire entraîne un basculement de la butée basculante de sa position de repos vers une position temporaire de blocage de l'entrée de la seconde gorge ou gorge descendante.

Lorsque le basculeur d'une hauteur donnée est en position de repos, il permet à l'élément mobile de quitter le logement devant lequel il est monté afin que l'élément mobile puisse atteindre la hauteur suivante. En arrivant à la hauteur suivante, l'élément mobile fait basculer le basculeur de cette hauteur vers une position temporaire permettant à l'élément mobile de passer devant l'entrée du logement correspondant. Lorsque l'élément mobile a dépassé le basculeur, ce dernier rebascule dans sa position de repos et libère ainsi l'accès au logement correspondant.

Lorsque l'élément mobile arrive à la hauteur la plus élevée prévue, l'élément mobile fait basculer le basculeur correspondant pour passer devant l'entrée du logement le plus haut. En même temps, le basculeur fait basculer la butée afin de bloquer la course de l'élément mobile. Lorsque l'élément mobile est passé devant le logement le plus haut et a ensuite dépassé le basculeur correspondant, ce dernier retourne dans sa position de repos et permet à l'élément mobile d'entrer dans le logement le plus haut. En même temps, le retour à la position de repos du basculeur permet à la butée basculante de retourner également, sous la contrainte d'un élément de rappel, dans sa position de repos et d'ouvrir ainsi l'accès à la seconde gorge, réservée exclusivement à la descente de l'élément mobile vers le logement le plus bas.

Lorsque l'élément mobile arrive en descendant devant le logement le plus bas, il fait basculer le basculeur correspondant vers sa position temporaire permettant à l'élément mobile d'accéder au logement. Lorsque l'élément mobile est entré dans ce logement, le basculeur retourne dans sa position de repos et libère l'accès à la gorge montante.

Grâce à cette disposition des basculeurs et de la butée basculante, qui forment ensemble des moyens d'aiguillage disposés à l'entrée de chaque logement, il est déterminé un parcours quasiment en boucle pour l'élément mobile de chacun des deux supports et en même temps un parcourt unique de changement de hauteur pour le panneau. Quelle que soit la position du panneau à un moment donné, lorsqu'il s'agit de déplacer le panneau vers une autre hauteur, l'utilisateur doit soulever le panneau par le bord orienté vers l'ouverture du coffre et le tirer vers lui, ce qui correspond à un geste intuitif, et continuer ensuite à le tirer vers le haut jusqu'à la nouvelle hauteur choisie. Lorsque le panneau a atteint la nouvelle hauteur, l'utilisateur laisse glisser les éléments mobiles du panneau dans les logements correspondants, le cas échéant en poussant le panneau légèrement, et pose le panneau sur les éléments d'appui prévus à cet effet près de l'ouverture du coffre.

Et lorsqu'il s'agit de déplacer le panneau à une hauteur inférieure, l'utilisateur procède comme ci avant et fait passer le panneau par la hauteur maximale afin que les éléments mobiles puissent entrer dans les gorges de descente et atteindre les logements les plus bas avant de pouvoir remonter vers une autre hauteur.

L'effort de l'utilisateur du véhicule automobile pour soulever le panneau afin de le placer à une autre hauteur est avantageusement facilité par la présence d'un ressort lame qui se déroule, contre contrainte élastique, lorsque le chariot auquel il est fixé descend et se rembobine lorsque le chariot est monté. Le ressort lame est monté à cet effet dans la partie supérieure du support.

Grâce à ces différentes dispositions de l'invention, le panneau est maintenu en permanence par les supports disposés sur les côtés au fond du coffre. L'utilisateur du véhicule automobile, lorsqu'il cherche à changer la position du panneau, n'a donc pas besoin de se soucier d'un détachement du panneau qui lui rendrait la manoeuvre difficile. Pour permettre néanmoins d'enlever le panneau facilement, ce dernier est avantageusement pourvu de deux axes escamotables, un pour chaque support. En cas de besoin, les axes sont escamotés sans qu'il soit donc nécessaire de les démonter. En variante, lorsque le panneau est monté sur un axe unique, il est concevable que cet axe soit un axe télescopique ou que cet axe soit monté sur le panneau à l'aide de moyens escamotables.

Les supports du dispositif selon l'invention sont avantageusement complétés par deux moyens assurant un mouvement souple et homogène en translation du panneau. En premier, chacun des supports est pourvu d'un chariot monté mobile en translation suivant un axe parallèle aux gorges et suspendu sur un ressort lame monté en haut du support. Le ressort lame se déroule et se tend lorsque le chariot descend. Et lorsque le chariot doit remonter, le ressort se rembobine et soutient ainsi le mouvement en translation du chariot. En même temps, le ressort se détend. Chacun des chariots est pourvu d'un trou oblong formé de manière que l'élément mobile puisse être déplacé à l'intérieur de ce trou oblong selon une orientation correspondant à celle des logements.

En second, chacun des supports est pourvu d'une crémaillère et chacun des éléments mobiles est pourvu d'un ralentisseur comportant un pignon engrenant dans la crémaillère. Cette disposition supplémentaire de l'invention permet d'éviter que la descente du panneau à partir de la position la plus élevée vers la position la plus basse ressemble à une chute. En même temps, le guidage du panneau à l'aide des deux pignons engrenant chacun dans la crémaillère correspondante assure que le panneau soit remonté et descendu de manière équilibrée, notamment horizontale.

Le but de l'invention est également atteint avec un véhicule automobile comprenant un dispositif tel que décrit ci-dessus.

D'autres caractéristiques et avantages de la présente invention ressortiront de la description ci-après d'un mode de réalisation. La description est faite en référence aux dessins annexés dans lesquels, en des vues en perspective, les figures représentent :
figure 1 : la moitié droite du dispositif de l'invention avec la moitié droite d'un panneau dont le positionnement peut être varié à l'aide du dispositif de l'invention,
figure 2 : le support droit du dispositif de l'invention du côté du panneau,
figure 3 : le support de la figure 2, mais du côté opposé au panneau,
figure 4 : le corps du support droit du dispositif de l'invention du côté opposé au panneau,
figure 5 : le corps du support droit du dispositif de l'invention du côté du panneau,
figures 6 et 7 : un ensemble de moyens d'aiguillage du dispositif de l'invention,
figures 8 à 10 : le détail des moyens d'aiguillage du dispositif de l'invention,
figures 11 et 12 : des moyens ralentisseur du dispositif de l'invention,
figure 13 : un axe escamotable pour la fixation d'un panneau sur le dispositif de l'invention, et
figure 14 : des moyens de suspension d'un chariot faisant partie de chacun des supports du dispositif de l'invention.

Comme convenu plus haut dans le présent texte, la description ci-après d'un mode de réalisation d'un dispositif selon l'invention est limitée, pour ne pas l'encombrer, à la description d'un seul des deux supports, puisque les deux supports sont formés de manière symétrique par rapport à un plan de symétrie passant par l'axe longitudinal du véhicule automobile. La conception du support gauche découle donc de manière évidente de celle du support droit.

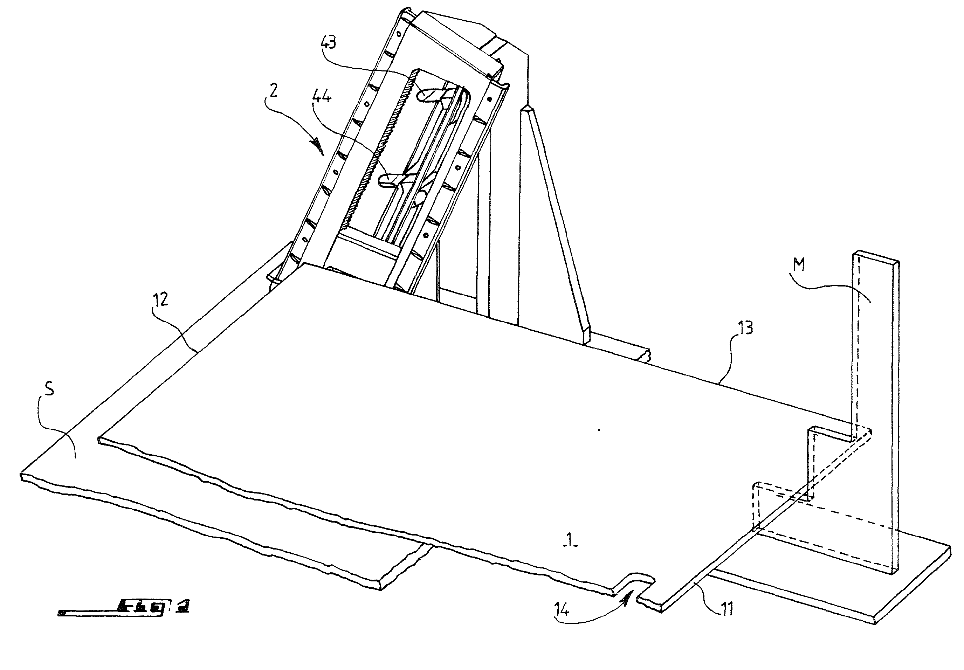

Par ailleurs, comme la figure 1 le montre, les deux supports sont avantageusement formés de manière à prendre le panneau entre eux et de le maintenir par ses bords latéraux droit et gauche, vu dans le sens de la marche avant du véhicule.

De plus, le dispositif de l'invention est principalement destiné à être installé dans le coffre d'un véhicule automobile, notamment d'une voiture de tourisme. Toutefois, il est également concevable, sans sortir du principe de la présente invention, d'installer un tel dispositif dans un fourgon ou une fourgonnette afin de pouvoir compartimenter en altitude l'espace de chargement ou une partie de celui-ci selon un rapport variable.

Pour cette raison, la référence S désigne, de manière indifférente, la structure d'un coffre ou de l'espace de chargement d'un véhicule automobile, sur lequel le dispositif de l'invention est disposé.

La figure 1 représente le support droit 2 des deux supports faisant partie du dispositif selon l'invention, ainsi que la moitié droite d'un panneau 1 destiné à être maintenu par le dispositif de l'invention à l'une quelconque de plusieurs hauteurs prédéterminées. La figure 1 représente le panneau 1 avec un premier bord 11 par lequel un utilisateur du véhicule automobile saisit le panneau, lorsqu'il intervient pour changer la hauteur du panneau 1. Lorsque le dispositif de l'invention est installé dans le coffre d'un véhicule automobile, le bord 11 est orienté vers l'ouverture du coffre.

La figure 1 représente le panneau 1 aussi avec un bord 12 opposé au bord 11, un bord droit 13 et la moitié droite d'un évidement 14 pratiqué dans le panneau 1 et permettant à un utilisateur du véhicule de saisir le panneau 1 en vue d'un déplacement de celui-ci vers une autre hauteur.

La figure 1 représente enfin aussi des moyens de maintien M destinés à maintenir le panneau 1, à la hauteur choisie, par une zone opposée à celle à laquelle sont fixés les supports 2. Dans l'exemple représenté, les deux supports 2 maintiennent le panneau 1 à deux zones s'étendant à partir des deux côtés latérales 13 et du bord 12. Et les moyens de maintien M maintiennent le panneau 1 à des zones s'étendant à partir des deux côtés latérales 13 et le bord 11.

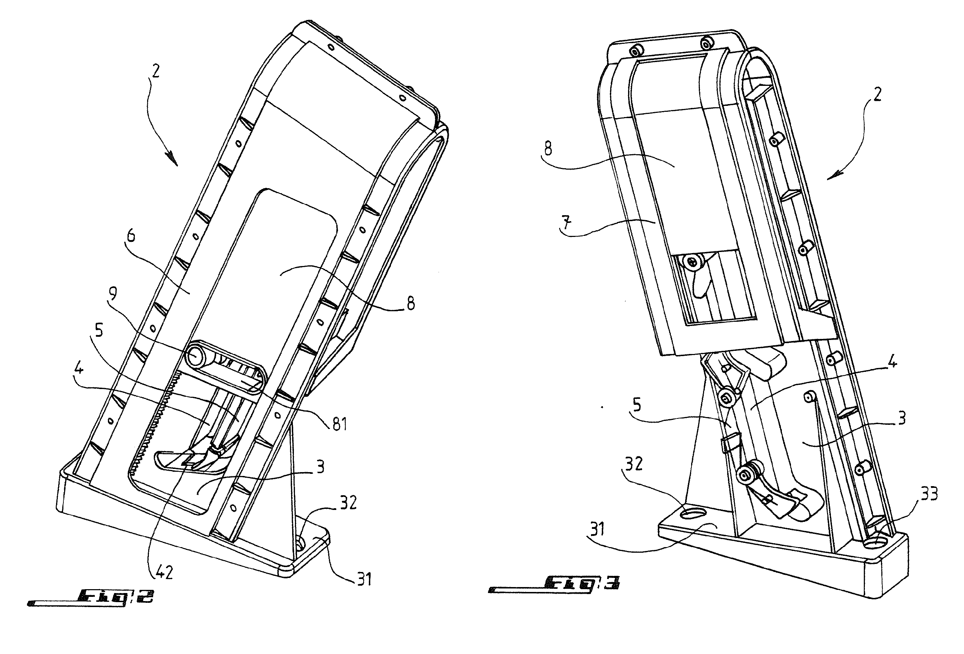

Comme les figures 2 et 3 le montrent, le support 2 comporte un corps 3 conformé pour être fixé par son socle 31, par exemple à l'aide de vis traversant des orifices 32, 33, dans le plancher d'un coffre d'un véhicule automobile. Le corps 3 est incliné tout en s'étendant dans un plan essentiellement vertical lorsque le dispositif de l'invention est monté dans un véhicule automobile. Le degré d'inclinaison tient compte de l'inclinaison des dossiers des sièges arrière d'un véhicule automobile dans lequel le dispositif de l'invention doit être installé. Il s'ensuit que, lorsque le dispositif de l'invention est prévu à être installé dans un véhicule dont le coffre ou l'espace de chargement est délimité par rapport à l'espace passager par une paroi verticale, que le corps 3 n'est pas incliné.

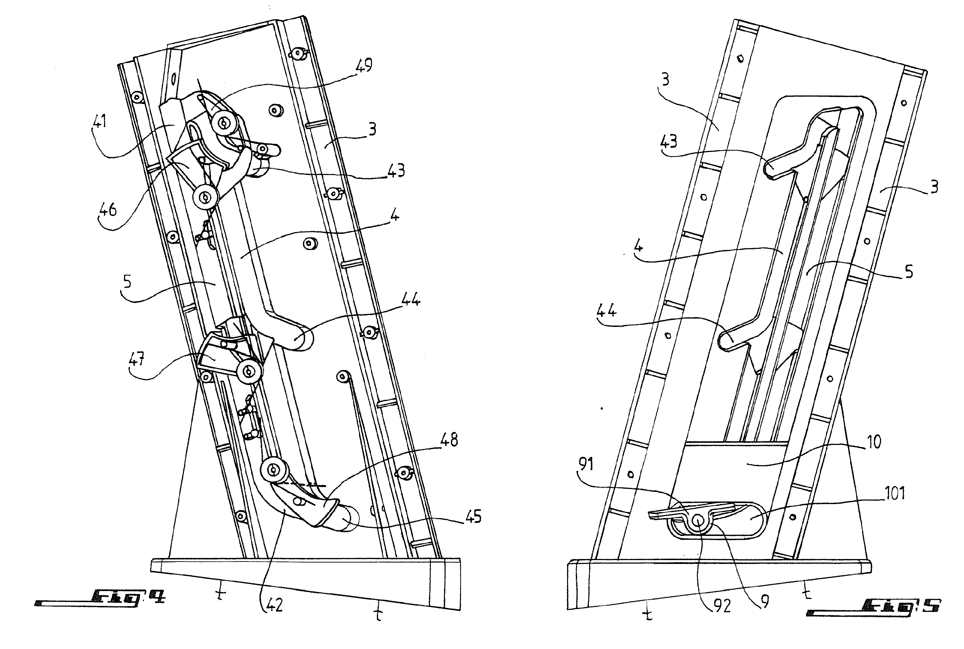

Le corps 3 est pourvu de deux gorges 4, 5 reliées l'une à l'autre à leurs deux extrémités opposées 41, 42 (voir figure 4). Les gorges 4, 5 sont formées dans le corps 3 de manière qu'elles s'étendent en hauteur lorsque le support est monté dans le coffre. Lorsque le dispositif de l'invention est destiné à être installé dans un coffre ou espace de chargement délimité de l'habitacle par une paroi verticale, le corps 3 est conformé de manière que les deux gorges 4, 5 s'étendent essentiellement verticalement lorsque le dispositif est installé.

Le corps 3 est recouvert d'une façade guide avant 6 et d'un guide arrière 7 à l'intérieur duquel est monté glissant un rideau 8. Le rideau 8 comporte une ouverture 81 s'étendant au moins positivement horizontalement lorsque le support 2 est monté dans un véhicule automobile.

La figure 4 représente le corps 3 du côté destiné à être orienté vers des éléments latéraux de la structure S du coffre de véhicule automobile. On observe sur cette figure plus particulièrement la disposition parallèle l'une à l'autre des deux gorges 4, 5 et la façon dans laquelle les deux gorges sont reliées l'une à l'autre à leurs extrémités opposées supérieure 41 et inférieure 42. En effet, le corps 3 comprend trois logements 43, 44, 45 inclinés vers le bas, qui s'étendent à partir de la gorge 4, c'est-à-dire à partir de celle des deux gorges qui est disposée plus éloignée de l'ouverture du coffre. Les logements 43 à 45 sont disposés à des niveaux correspondants aux différentes hauteurs prévues pour le positionnement du panneau 1.

La liaison entre le support 2 et plus particulièrement le corps 3, et le plateau 1 est assuré par un élément mobile 9 qui est conformé pour pouvoir circuler dans les gorges 4, 5 et dans les logements 43 à 45 afin de pouvoir déplacer le panneau 1 d'une position à une autre.

Grâce à la disposition inclinée des logements 43 à 45 et grâce à l'utilisation de deux gorges dont l'une est réservée au mouvement montant de l'élément mobile 9 et dont l'autre est réservée au mouvement descendant de l'élément mobile 9, la mise en position du panneau 1 peut s'effectuer de manière intuitive avec des efforts de manoeuvre les plus faibles possibles. En effet, pour faire passer le panneau 1 d'une position à une autre, il suffit que l'utilisateur du véhicule tire le panneau vers le haut et jusqu'au logement suivant, puis laisse glisser les éléments mobiles 9 dans les logements correspondants de chacun des deux supports. Lorsque le panneau est arrivé à la position la plus élevée, la position suivante dans cet ordre de mouvement est la position la plus basse. Pour y arriver, l'utilisateur du véhicule automobile tire d'abord le panneau vers lui pour le sortir des logements et pour arriver au point le plus élevé de la gorge montante 4 avant de repousser le panneau afin que les éléments mobiles 9 s'engagent dans la gorge descendante 5 correspondante de chacun des deux supports 2.

Lorsque le panneau 1 est arrivé dans sa position la plus basse et les éléments mobiles 9 sont donc rentrés dans le logement inférieur 45, les éléments mobiles 9 sont prêts à s'engager dans la gorge montante 4 lorsqu'il s'agit de changer à nouveau de position.

Pour éviter que l'élément 9 redescende dans la gorge 4 vers une position inférieure, le corps 3 est équipé de basculeurs 46 à 48 disposés proches de l'entrée de chacun des logements 43 à 45. Chacun des basculeurs 46 à 48 est conformé et disposé de manière que l'élément mobile 9 puisse atteindre l'entrée du logement suivant et y entrer, mais que l'élément mobile 9, lorsqu'il est sorti du logement correspondant, ne puisse avancer qu'en montant jusqu'à l'extrémité supérieure de la gorge 4, puis redescendre dans la gorge 5 jusqu'à la position et le logement le plus bas.

Lorsque l'élément mobile 9 arrive à la position la plus haute et donc à l'entrée du logement le plus haut 43, une descente accidentelle par la gorge 5 est empêchée par un élément basculant supplémentaire 49 disposé au-dessus de l'élément basculant le plus haut 46.

La figure 5 représente le corps 3 en une vue en élévation à partir du côté destiné à être orienté vers le panneau 1. On reconnaît sur cette figure plus particulièrement les deux gorges 4 et 5 ainsi que le logement supérieur 43 et le logement intermédiaire 44. Le logement inférieur 45 n'est pas représenté, mais sa position peut être déduite à partir de la position de l'élément mobile 9 et d'un élément de liaison 91 relié à l'élément mobile 9 par un axe 92.

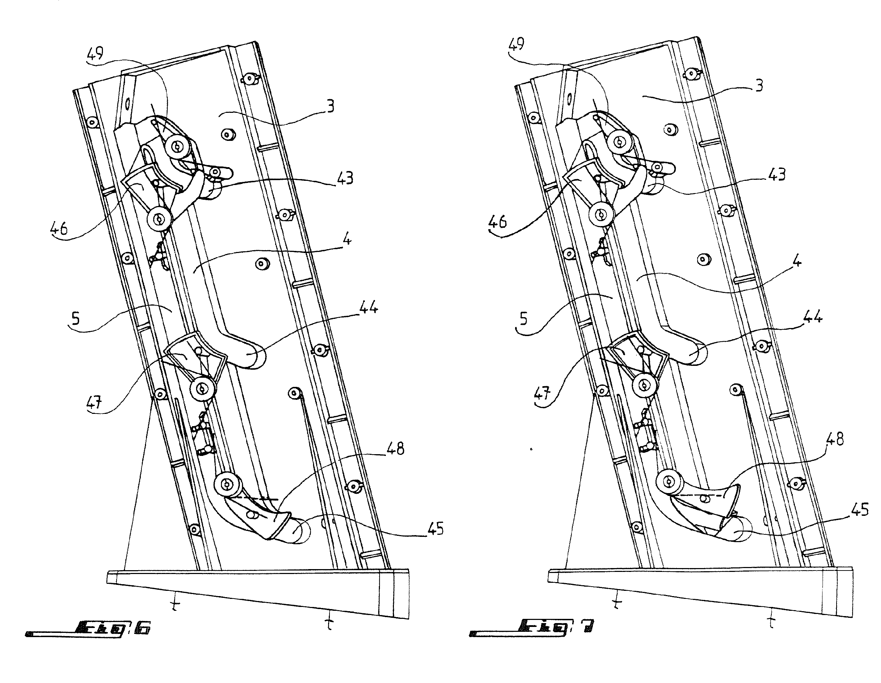

La figure 6 représente à nouveau le corps 3 du côté des basculeurs 46 à 48. Alors que le basculeur intermédiaire 47 est représenté sur la figure 4 en une position laissant chemin libre à l'élément mobile 9 de passer du logement inférieur 45 à l'entrée du logement intermédiaire 44, le basculeur 47 intermédiaire est représenté sur la figure 6 dans une position empêchant l'élément mobile 9 de redescendre dans la gorge montante 4 et donnant libre accès à l'élément mobile 9 uniquement au logement 44.

La figure 7 représente le corps 3 comme sur les figures 4 et 6 à l'exception de la position du basculeur inférieur 48 qui est représenté ici dans une position donnant accès au logement inférieur 45, alors que dans la position représentée sur les figures 4 et 6, le basculeur 48 ne permet qu'une sortie du logement inférieur 45.

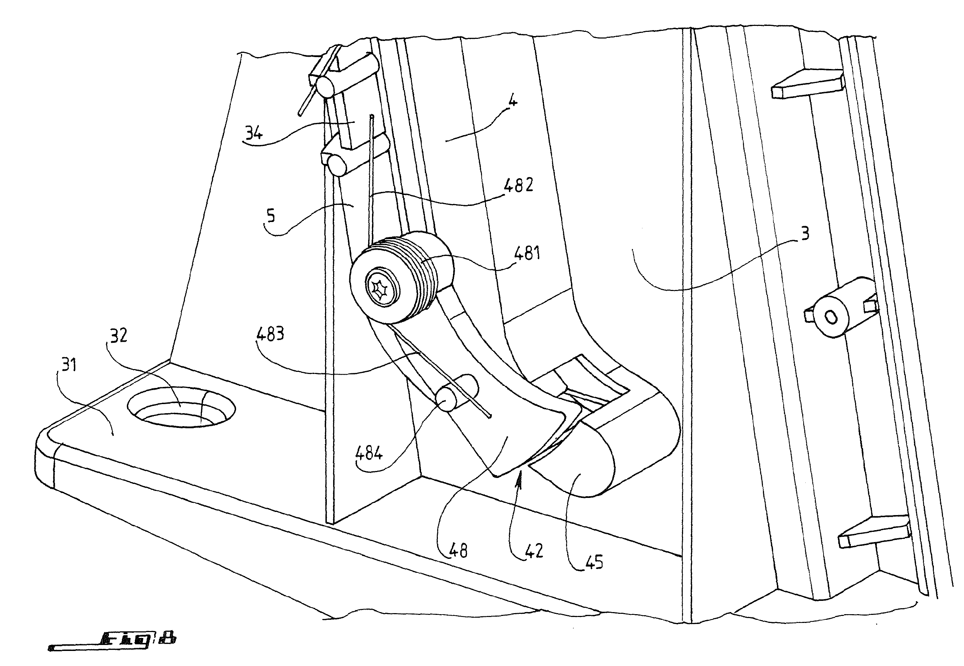

La figure 8 représente une partie inférieure du corps 3 avec le socle 31 et le trou de fixation 32 et plus particulièrement avec l'extrémité inférieure 42 de la gorge montante 4, à laquelle extrémité la gorge descendante 5 rejoint la gorge montante 4, ainsi que l'élément basculant 48.

Le basculeur inférieur 48 est représenté dans une position de repos dans laquelle il permet à l'élément mobile 9 de sortir du logement 45 pour être déplacé par translation vers le logement intermédiaire 44. Le basculeur 48 est maintenu dans sa position de repos par un ressort hélicoïdal 481 ayant deux bras 482, 483. Le bras supérieur 482 du ressort hélicoïdal 481 prend appui à une des parties 34 en saillie dont le corps 3 est pourvu. Le bras inférieur 483 prend appui sur une excroissance 484 de l'élément basculant 48. En raison de la précontrainte que le ressort hélicoïdal 481 exerce sur le basculeur 48, ce dernier reste en position basse le temps que l'élément mobile 9 ne vient pas le chasser de cette position. L'élément basculant 48 est donc en position de repos.

Et lorsque l'élément mobile 9 descend dans la gorge 5 et arrive à l'extrémité inférieure commune 42 des gorges 4 et 5, l'élément mobile 9 fait écarter l'élément basculant 48 pour ouvrir l'accès au logement inférieur 45. L'élément mobile 9 fait donc basculer l'élément basculant 48 vers une position temporaire supérieure dégageant l'accès au logement 45. Lorsque l'élément mobile est passé, l'élément est repoussé dans sa position de repos par le ressort hélicoïdal 481.

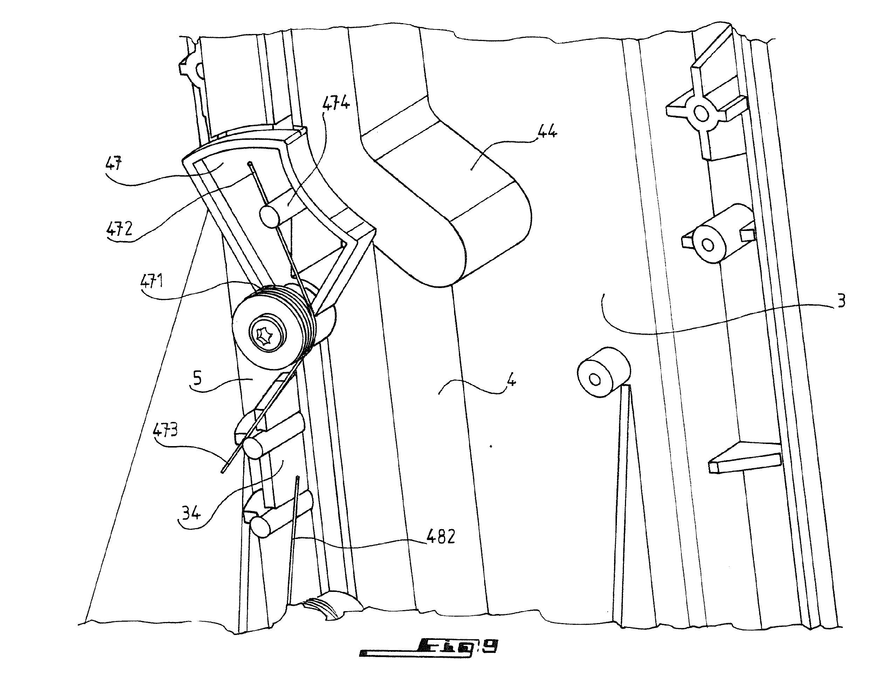

La figure 9 représente une partie intermédiaire du corps 3 et plus particulièrement le logement intermédiaire 44 et l'élément basculant 47. L'élément basculant 47 est représenté dans une position de repos dans laquelle il garde ouvert la sortie du logement 44. L'élément basculant 47 est maintenu dans cette position par un ressort hélicoïdal 471 dont un premier bras 472 prend appui sur une partie proéminente 474 de l'élément basculant 47. Un second bras 473 du ressort hélicoïdal 471 prend appui sur l'élément 34 sur lequel prend également appui le bras supérieur 482 du ressort hélicoïdal 481 exerçant une précontrainte sur le basculeur inférieur 48.

Lorsque l'élément mobile 9 remonte du logement 45 vers le logement 44, il fait dévier l'élément basculant 47 vers une position temporaire pour pouvoir passer jusqu'à l'entrée du logement intermédiaire 44. Lorsque l'élément mobile 9 est passé, l'élément basculant 47 reprend sa position de repos grâce à la contrainte exercée par le ressort hélicoïdal 471.

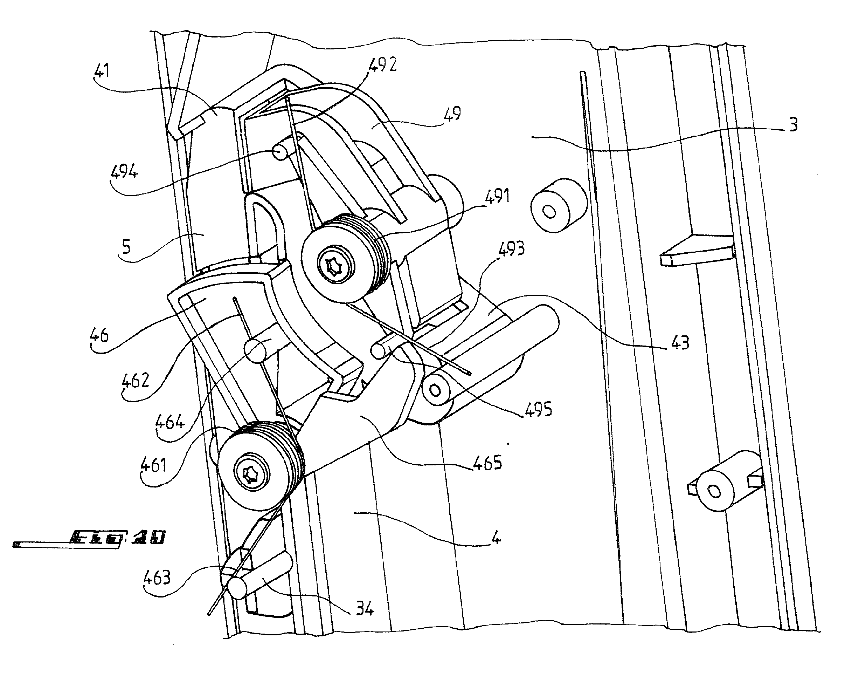

La figure 10 représente une partie supérieure du corps 3 et plus particulièrement la jonction supérieure 41 des gorges 4, 5 et la disposition des deux éléments basculants 46 et 49.

L'élément basculant 46 est représenté dans sa position de repos dans laquelle il permet la sortie du logement supérieur 43 mais empêche toute redescente dans la gorge montante 4. L'élément basculant 46 est maintenu dans cette position de repos par un ressort hélicoïdal 461 dont un bras supérieur 462 prend appui sur une partie proéminente 464 de l'élément basculant 46 et dont un bras inférieur 463 prend appui sur un élément 34 formé à cet effet.

L'élément basculant 49 est représenté dans une position de repos dans laquelle il garde ouvert la sortie du logement 43. L'élément basculant 49 est maintenu dans cette position par un ressort hélicoïdal 491 dont un premier bras 492 prend appui sur une partie proéminente 494 de l'élément basculant 49. Un second bras 493 du ressort hélicoïdal 491 prend appui sur la partie proéminente 495 de l'élément basculant 49.

Lorsque l'élément mobile 9 arrive du logement intermédiaire 44, il fait dévier l'élément basculant 46 pour pouvoir accéder à l'entrée du logement 43. Par le basculement de l'élément basculant 46, un levier 465, solidaire de l'élément basculant 46, agit sur une partie proéminente 495 de l'élément basculant 49 et fait pivoter l'élément basculant 49 à partir de sa position de repos vers une position temporaire dans laquelle il libère l'accès au logement supérieur 43, mais bloque la gorge descendante 5.

Lorsque l'élément mobile 9 est passé devant l'élément basculant 46, ce dernier retourne dans sa position de repos, sous la contrainte du ressort hélicoïdal 461, et l'élément mobile 9 accède ensuite au logement supérieur 43. L'élément basculant 46 et avec lui le levier 465 étant déjà retourné dans la position de repos, l'élément mobile 9, en entrant dans le logement 43, permet à l'élément basculant 49 de retourner dans sa position de repos et de libérer ainsi le chemin de sortie du logement 43 vers la gorge 5.

Grâce à la disposition décrite ci avant des moyen d'aiguillage formés par les éléments basculants 46 à 49, le changement de position du panneau 1 se fait successivement à partir de l'une quelconque des positions prédéterminés en remontant les éléments mobiles 9 dans la gorge correspondante 4 de chacun des deux supports 2, puis en redescendant dans la gorge 5 vers la position basse et ainsi de suite. Par leur mouvement de basculement, les éléments basculants 46 à 49 remplissent un rôle d'aiguillage entre la gorge montante et les logements d'une part et entre la gorge montante et la gorge descendante d'autre part.

En ce qui concerne le choix du nombre et de la disposition des positions prédéterminées, l'exemple décrit ci avant et représenté dans les dessins comporte trois positions dont la position inférieure est choisie de manière que le panneau 1 soit en repos sur le plancher du coffre d'un véhicule automobile. La position intermédiaire est choisie de manière à diviser le coffre en deux parties à peu près égales en hauteur et la position supérieure est choisie de manière à fermer le coffre vers le haut. Il va sans dire que tout autre choix est également possible sans sortir du principe de la présente invention. Ainsi, le nombre de positions peut être égal ou supérieur à deux, et la position inférieure ou la plus basse peut être prédéterminée à un niveau supérieur à celui du plancher du coffre.

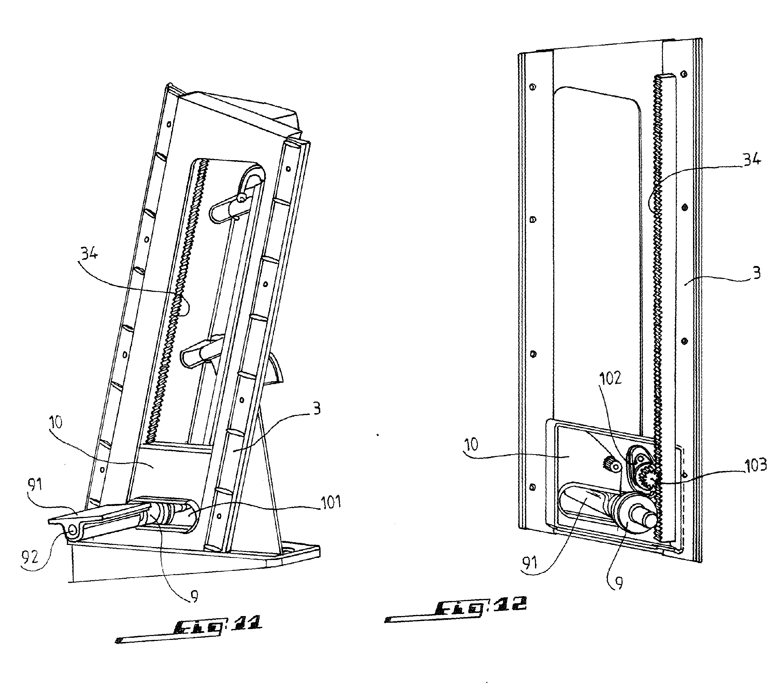

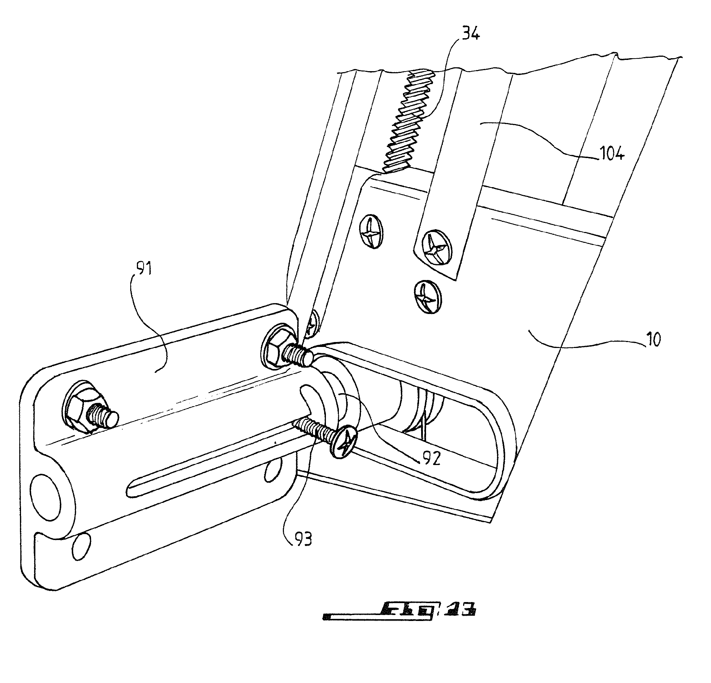

Comme les figures 11 et 12 le représentent en détail, le dispositif de l'invention comprend deux axes 92 fixés sur la face inférieure du panneau 1 par deux éléments de fixation 91. Avantageusement, le panneau 1 est pourvu de deux axes escamotables comme cela est représenté sur la figure 13. Selon l'exemple de réalisation choisi, l'élément de fixation 91 est pourvu à cet effet d'un passage en L dans lequel peut se déplacer une manette 93, réalisée par exemple sous la forme d'une vis solidaire de l'axe 92 au moyen de laquelle l'axe 92 peut être rétracté pour permettre à un utilisateur du véhicule de pouvoir retirer le panneau 1 si besoin est, sans avoir à démonter l'ensemble du dispositif. Au montage du panneau, les axes 92 sont introduits dans les éléments mobiles correspondants 9.

Comme le montrent les figures 11 et 13 également, chacun des supports 2 est pourvu d'un chariot 10 monté coulissant à l'intérieur du corps 3, suivant un axe parallèle aux gorges 4 et 5. Le chariot 10 est pourvu d'un trou de passage allongé 101 servant à la fois comme passage de l'axe 92 et comme piste de guidage pour l'élément mobile 9. Le passage allongé 101 est formé de manière que l'élément mobile 9 puisse être déplacé à l'intérieur de ce trou oblong selon une orientation correspondant à celle des logements.

Chacun des chariots 10 est suspendu au corps 3 par un ressort lame 104 monté en haut du support. Le ressort lame 104 se déroule et se tend lorsque le chariot 10 descend. Et lorsque le chariot 10 remonte, le ressort 104 se rembobine et soutient ainsi le mouvement en translation du chariot 10. En même temps, le ressort 104 se détend. Chacun des chariots est pourvu d'un trou oblong.

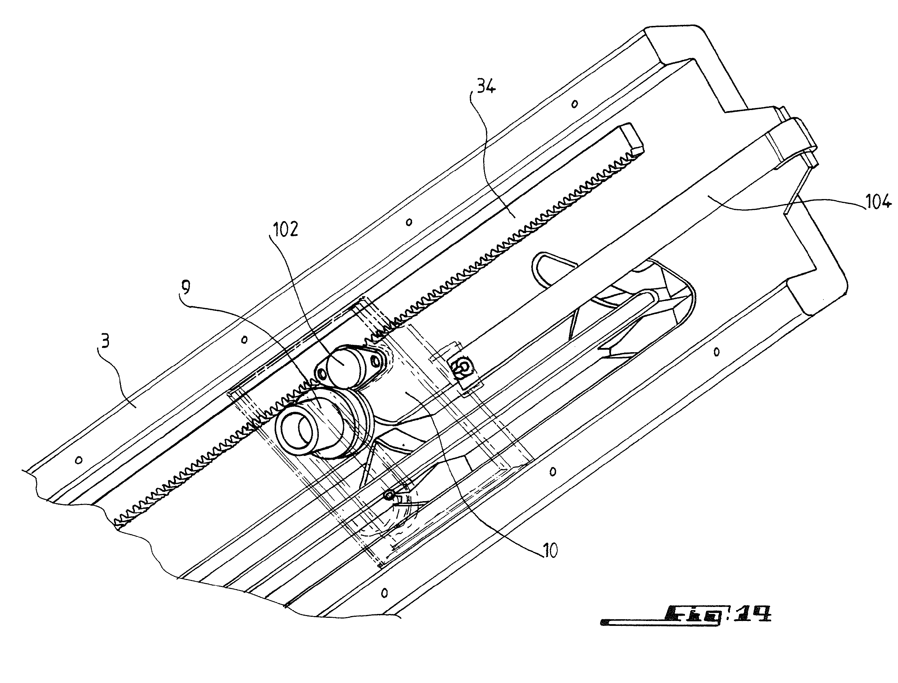

Comme le montre la figure 14, chacun des supports 2 est pourvu d'une crémaillère 34 et chacun des chariots 10 est pourvu d'un ralentisseur 102 comportant un pignon 103 engrenant dans la crémaillère 34. Cette disposition supplémentaire de l'invention permet d'éviter que la descente du panneau 1 à partir de la position la plus élevée vers la position la plus basse ressemble à une chute. En même temps, le guidage du panneau à l'aide des deux pignons 103 engrenant chacun dans la crémaillère correspondante 34 assure que le panneau 1 soit remonté et descendu de manière équilibrée, notamment horizontale.

## Revendications

1. Dispositif permettant de positionner un panneau (1) à différentes hauteurs dans le coffre d'un véhicule automobile, le dispositif comprenant deux supports (2) destinés à être solidaires d'une structure (S) du coffre et conformés pour pouvoir maintenir le panneau (1) à l'une quelconque de plusieurs hauteurs prédéterminées,
**caractérisé en ce que** chacun des supports (2) est pourvu de deux gorges (4, 5) reliées l'une à l'autre à leurs deux extrémités opposées (41, 42) et s'étendant en hauteur, lorsque le support est monté dans le coffre, et comporte des logements (43 à 45) s'étendant à partir de l'une (4) des deux gorges (4, 5) à des niveaux correspondant aux différentes hauteurs prévues pour le positionnement du panneau, un élément mobile (9) conformé pour pouvoir circuler dans les gorges (4, 5) et les logements (43 à 45) et pour être relié au bord latéral (4, 5) correspondant du panneau (1), et des moyens d'aiguillage (46 à 49) disposés à l'entrée de chaque logement (43 à 45) et conformés pour pouvoir empêcher l'élément mobile (9) de descendre dans la gorge (4) à partir de laquelle les logements (43 à 45) s'étendent,
les logements (43 à 45) de chacun des supports (2) étant de forme essentiellement allongée et partant de celle (4) des deux gorges (4, 5) qui, lorsque les supports (2) sont montés dans le coffre, est disposée plus éloignée de l'ouverture du coffre.

2. Dispositif selon la revendication 1, **caractérisé en ce qu'**il comprend au moins un axe (92) destiné à être fixé au panneau (1) pour établir la liaison entre les éléments mobiles (9) et le panneau (1).

3. Dispositif selon la revendication 1 ou 2, **caractérisé en ce que** le panneau est maintenu par des bords latéraux (13) de celui-ci et comprend à cet effet deux axes escamotables (92) destinés à être fixés au panneau (1) pour établir la liaison entre les éléments mobiles (9) et le panneau (1).

4. Dispositif selon l'une quelconque des revendications 1 à 3, **caractérisé en ce que** les moyens d'aiguillage comprennent des basculeurs (46 à 49) montées sous contrainte d'éléments de rappel (461, 471, 481) de manière que chaque basculeur () bascule entre une position de repos permettant aux éléments mobiles (9) de quitter un logement (43, 44, 45) et d'être dirigé exclusivement vers le suivant et une position temporaire permettant aux éléments mobiles (9) d'arriver à l'entrée du logement suivant.

5. Dispositif selon l'une quelconque des revendications 1 à 4, **caractérisé en ce que** les moyens d'aiguillage (46 à 49) sont conformés et montés dans chacun des supports (2) de manière que la gorge (4) à partir de laquelle les logements (43, 44, 45) s'étendent, ne puisse être parcourue par l'élément mobile (9) correspondant qu'en montant et que l'autre gorge (5) ne puisse être parcourue qu'en descendant.

6. Dispositif selon l'une quelconque des revendications 1 à 5, **caractérisé en ce que** l'élément mobile (9) est une bague de guidage.

7. Dispositif selon l'une quelconque des revendications 1 à 6, **caractérisé en ce que** chacun des supports (2) est pourvue d'un chariot (10) monté mobile en hauteur.

8. Dispositif selon la revendication 7, **caractérisé en ce que** chacun des supports (2) est pourvu d'une crémaillère (34) dans laquelle engrène le pignon (103) d'un ralentisseur (102) monté sur le chariot (10) correspondant.

9. Dispositif selon la revendication 7 ou 8, **caractérisé en ce que** chacun des supports (2) est pourvu d'un ressort lame (104) reliant le chariot (10) avec une partie supérieure du support.

10. Véhicule automobile, **caractérisé en ce qu'**il comprend un dispositif selon l'une quelconque des revendications 1 à 9.
